# EUROPEAN PATENT APPLICATION

(11) **EP 2 484 532 A2**
(43) Date of publication of application: **08.08.2012**
(21) Application number: 11193196.0
(22) Date of filing: 13.12.2011
(51) Int. Cl.: B41J 2/21

(54) **Image Forming Apparatus and Computer Program Product**

(30) Priority: 13.12.2010 JP 2010277489
(71) Applicant: Ricoh Company, Ltd., Tokyo 143-8555 (JP)
(72) Inventor: Takagi, Yasunobu, Tokyo, 143-8555 (JP); Kamei, Toshihito, Tokyo, 143-8555 (JP); Ito, Takayuki, Tokyo, 143-8555 (JP)
(74) Representative: Schwabe - Sandmair - Marx

(57) **Abstract**

An ink-jet image forming apparatus (60) for scanning a recording medium (12) in a main scanning direction by an ink-jet head (7), and conveying the recording medium in a sub scanning direction so that a printing area formed at every scan by the recording head overlaps with an adjacent printing area at their boundary area. The apparatus includes a distribution determining unit (606) that determines a dot distribution at every scan in the overlapped boundary area, a nozzle determining unit (610) that determines an alternative nozzle capable of forming dots instead of an non-ejectable nozzle in the overlapped boundary area, and a dot determining unit (612) that determines a dot size or a dot density from the alternative nozzle, on the basis of a printing position by the alternative nozzle and the dot distribution determined by the dot distribution determining unit.

## Description

### CROSS-REFERENCE TO RELATED APPLICATIONS

The present application claims priority to and incorporates by reference the entire contents of Japanese Patent Application No. 2010-277489 filed in Japan on December 13, 2010.

### BACKGROUND OF THE INVENTION

### 1. Field of the Invention

The present invention relates to an ink-jet image forming apparatus and a computer program product.

### 2. Description of the Related Art

An ink-jet image forming apparatus is provided with a recording head having a plurality of nozzles for ejecting ink. The ink is ejected from nozzles onto a recording medium such as paper sheet or the like so that images are formed on the recording medium. As the recording head, there are two types of heads, including a serial-type recording head and a line-type recording head.

The serial-type recording head scans the recording medium while moving in a main scanning direction orthogonal to a sub scanning direction of conveying the recording medium so that a printing area is formed having a predetermined width on the recording medium at every scan. The recording medium is moved or conveyed in the sub scanning direction every time when one scan is completed so that an image is formed on the recording medium as a whole.

On the other hand, the line-type recording head is provided with an array of nozzles aligned in the main scanning direction extending over a width almost the same as a width of the recording medium. The recording head of this type does not move, while the recording medium moves in the sub scanning direction under the head. For example, a plurality of head units is aligned extending over a certain length to form this type of head. In this case, the adjacent head units are arranged closely so that a printing area based on one head unit is continuous from a printing area based on the adjacent head unit.

According to the serial-type recording head and the line-type recording head as mentioned above, it is possible to print an image smoothly or continuously in the printing area formed at every scan or every head unit. However, if there is an error of conveying the recording medium (e.g. conveyance distance error) or an error of assembling the head units, a gap may be created in a boundary area between the adjacent printing areas. As a result, the gap may be observed as a stripe noise on the printed image.

In order to avoid such a stripe noise, there is known a "multi-pass" method for the serial-type recording head in which an amount of conveying a recording medium is controlled so that the adjacent printing areas overlap with each other at their boundary. The stripe noise can be avoided by printing an image in this overlapped boundary area by using different nozzles of the same head at every scan.

In this method, the stripe noise is prevented by obscuring the boundary between adjacent printing areas. Such an obscuration is realized by dispersing dots forming the printing area within the overlapped boundary area, in a case that positions where dots should be formed in the overlapped boundary area between the adjacent printing areas are displaced from the right place with respect to each other due to the error of conveying the recording medium.

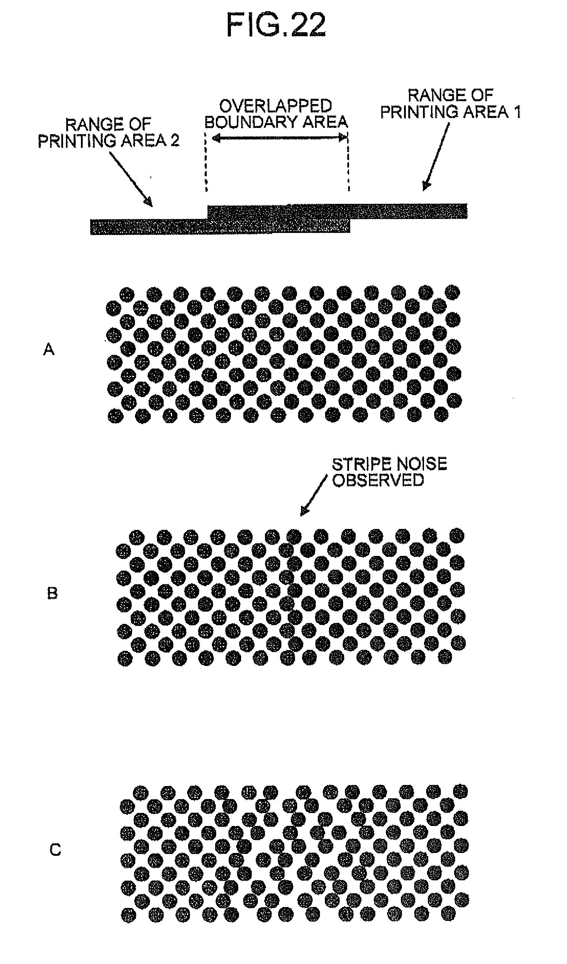

Fig. 22 is a diagram that illustrates the effect of the obscuration or "blurring" that is realized by dispersing the dots in the overlapped boundary area according to a conventional multi-pass method.

The black and white bars illustrated at the top of Fig. 22 indicate the ranges of two successive printing areas. The black bar indicates the range of the printing area 1 (right side in the figure), and the white bar indicates the range of the printing area 2 (left side in the figure). The area where the two bars overlap with each other is an overlapped boundary area.

If the dots of the printing areas 1 and 2 are simply connected to one another in the overlapped boundary area, and if the formation positions of the dots included in each of the printing areas are not misaligned, a stripe noise is not observed on the printed image, as illustrated in "A" of Fig. 22. However, as illustrated in "B" of Fig. 22, if the dot formation positions of the two printing areas are misaligned due to an error in amount of conveying a recording medium and, for example, if the dot formation position in the printing area 2 is shifted to the right direction in the figure toward the dot formation position in the printing area 1, a black stripe noise is observed on the printed image.

In contrast, as shown in "C" of Fig. 22, the multi-pass method prevents the stripe noise by dispersing dots in the overlapped boundary area so that the unevenness of the density due to the displacement of dots is reduced.

On the other hand, in an image forming apparatus using the line-type recording head, the stripe noise is prevented by arranging the head units so that the printing areas of the adjacent head units overlap with each other at their boundary. The stripe noise can be avoided by printing an image in this overlapped boundary area by using nozzles of these two adjacent head units randomly (Japanese Patent Application Laid-open No. 2006-240043).

In this method, nozzles that form dots in the overlapped boundary area are selected by using random numbers so that, in the same manner as that in "C" of Fig. 22, the dots included in two adjacent printing areas are dispersed in the overlapped boundary area; thus, it is possible to prevent the stripe noise on the printed image that may be caused by the misalignment of the dot formation positions of adjacent head units.

By the way, the stripe noise on the printed image may be caused not only by the error of conveying the recording medium or the error of assembling head units, but also by a non-ejectable nozzle of the recording head not capable of ejecting ink. Such a non-ejectable nozzle may be observed when the print request to eject ink is not received for a long time and thereby the ink inside the nozzle increases in its viscosity to clog the nozzles, or when paper dust or the like from the printing sheet attaches to and accumulates on the tip of the nozzle to clog the nozzle.

The stripe noise caused by the non-ejectable nozzle can be also prevented by the conventional method explained above. Specifically, an image is formed in the overlapped boundary area by two consecutive scans or by two adjacent head units, according to the conventional method. Thereby it is theoretically possible to make it up to a dot defect due to the non-ejectable nozzle with an alternative nozzle for printing the image in the overlapped boundary area, even in a case that one nozzle to be used for printing the image in the overlapped boundary area becomes non-ejectable. Hereinafter, the dot formed by the alternative nozzle to make it up to the dot defect is referred to a "complementary dot".

For example, as for the serial-type recording head, in a case that a part of nozzles for printing the overlapped boundary area becomes non-ejectable at one scan, the stripe noise due to the non-ejectable nozzle can be prevented by using another nozzle as the alternative nozzle when printing the overlapped boundary area at another scan, which is disposed at the same position where the non-ejectable nozzle should be disposed when printing the overlapped boundary area.

On the other hand, as for a line-type recording head, in a case that a part of nozzles for printing the overlapped boundary area becomes non-ejectable within one head unit, the stripe noise due to the non-ejectable nozzle can be prevented by using another nozzle of different head unit as the alternative nozzle when printing the overlapped boundary area by this different head unit, which is disposed at the same position where the non-ejectable nozzle should be disposed when printing the overlapped boundary area.

Even according to the conventional method explained above, however, there remains a problem of deviation between the position of the complementary dot and the position of the dot defect (i.e. the position of the missing dot), which may cause the stripe noise, in a case that there is any error in amount of conveying the recording medium or any error of assembling head units.

Specifically, according to the above-mentioned conventional method, the obscuration or "blurring" effect can be obtained by dispersing dots within the overlapped boundary area between the adjacent printing areas, in order to prevent the stripe noise from appearing on the printed image in a case that the positions where dots are formed are dislocated between the adjacent printing areas. However, in a case that the non-ejectable nozzle for one printing area is simply replaced with the alternative nozzle for another printing area, the image in the replaced part is formed by dots originally for another printing area. As a result, the "blurring" effect is reduced and still another stripe noise may arise.

The present invention has been made in view of the above-mentioned problems. Namely, there is a need to provide an ink-jet image forming apparatus capable of preventing any stripe noise in a case that there is a non-ejectable nozzle in the recording head.

### SUMMARY OF THE INVENTION

It is an object of the present invention to at least partially solve the problems in the conventional technology.

An image forming apparatus includes: an ink-jet recording head that scans a recording medium in a main scanning direction; a conveying unit that conveys the recording medium by a predetermined distance in a sub scanning direction so that a printing area formed at every scan by the recording head overlaps with an adjacent printing area at their boundary area; a plurality of nozzles of the head that form dots by using different nozzles of the same head at every scan in the overlapped boundary area; a distribution determining unit that determines a dot distribution to be formed at every scan in the overlapped boundary area; a nozzle determining unit that determines, when a nozzle for forming dots in the overlapped boundary area becomes non-ejectable, an alternative nozzle capable of forming dots instead of the non-ejectable nozzle from among the plurality of nozzles for forming dots in the overlapped boundary area; and a dot determining unit that determines a dot size or a dot density to be formed by the alternative nozzle in the overlapped boundary area, on the basis of a printing position by the alternative nozzle in the overlapped boundary area determined by the nozzle determining unit, and on the basis of the dot distribution determined by the dot distribution determining unit.

An image forming apparatus includes: a recording head including a plurality of ink-jet head units arranged so that a printing area formed by one head unit overlaps with a printing area formed by an adjacent head unit at their boundary area; a plurality of nozzles of the head that form dots using nozzles of both adjacent head units in the overlapped boundary area; a distribution determining unit that determines a dot distribution to be formed by each head unit in the overlapped boundary area; a nozzle determining unit that determines, when a nozzle of one head unit for forming dots in the overlapped boundary area becomes non-ejectable, an alternative nozzle capable of forming dots instead of the non-ejectable nozzle from among the nozzles of the adjacent head unit for forming dots in the overlapped boundary area; and a dot determining unit that determines a dot size or a dot density to be formed by the alternative nozzle in the overlapped boundary area, on the basis of a printing position by the alternative nozzle in the overlapped boundary area determined by the nozzle determining unit, and on the basis of the dot distribution determined by the dot distribution determining unit.

A computer program product includes a non-transitory computer-readable medium having computer-readable program codes embodied in the medium for scanning a recording medium in a main scanning direction by an ink-jet recording head; conveying the recording medium by a predetermined distance in a sub scanning direction so that a printing area formed at every scan by the recording head overlaps with an adjacent printing area at their boundary area by a conveying unit; and forming dots by using different nozzles of the same head at every scan in the overlapped boundary area. The program codes when executed causing a computer to execute: determining as a distribution determining unit a dot distribution to be formed at every scan in the overlapped boundary area; determining as a nozzle determining unit, when a nozzle for forming dots in the overlapped boundary area becomes non-ejectable, an alternative nozzle capable of forming dots instead of the non-ejectable nozzle from among other nozzles for forming dots in the overlapped boundary area; and determining as a dot determining unit a dot size or a dot density to be formed by the alternative nozzle in the overlapped boundary area, on the basis of a printing position by the alternative nozzle in the overlapped boundary area determined by the nozzle determining unit, and on the basis of the dot distribution determined by the dot distribution determining unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram that illustrates the configuration of an image forming apparatus according to a first embodiment of the present invention;
Fig. 2 is a side view that illustrates the configuration of a mechanical section of an image output unit in the image forming apparatus according to the first embodiment;
Fig. 3 is a plan view that illustrates the configuration of the mechanical section of the image output unit in the image forming apparatus according to the first embodiment;
Fig. 4 is a cross-sectional view of a liquid ejection head, which is included in a recording head 7, taken in the longitudinal direction of a liquid chamber in the image forming apparatus according to the first embodiment;
Fig. 5 is a cross-sectional view of the liquid ejection head, which is included in the recording head 7, taken in the lateral direction of the liquid chamber in the image forming apparatus according to the first embodiment;
Fig. 6 is a block diagram that illustrates the configuration of a control unit 200 in the image forming apparatus according to the first embodiment;
Fig. 7 is a block diagram that illustrates the exemplary configuration of a print control unit, which is included in a control unit, and a head driver in the image forming apparatus according to the first embodiment;
Fig. 8 is a diagram that illustrates a drive waveform generated by a drive-waveform generating unit of the print control unit illustrated in Fig. 7;
Fig. 9 is a diagram that illustrates each drive signal that is selected from the drive waveform illustrated in Fig. 8 and that is for a small droplet, a medium droplet, a large droplet, and micro driving;
Fig. 10 is a functional block diagram that illustrates the function realizing units included in the control unit of the image forming apparatus according to the first embodiment;
Fig. 11 is a diagram that illustrate an exemplary mask pattern to be used by a distribution determining unit in the image forming apparatus according to the first embodiment,;
Fig. 12 is a flowchart that illustrates the steps of an operation performed by the image forming apparatus according to the first embodiment;
Fig. 13 is a block diagram that illustrates the configuration of an image forming apparatus according to a third embodiment;
Fig. 14 is a plan view that illustrates the configuration of a mechanical section of an image output unit in the image forming apparatus according to the third embodiment;
Fig. 15 is a diagram that illustrates the configuration of a recording head in the image forming apparatus according to the third embodiment;
Fig. 16 is a functional block diagram that illustrates the function realizing units included in a control unit in the image forming apparatus according to the third embodiment;
Fig. 17 is a flowchart that illustrates the steps of an operation performed by the image forming apparatus according to the third embodiment;
Fig. 18 is a diagram that illustrates an exemplary arrangement of head units in a recording head that is used in an image forming apparatus according to a fourth embodiment;
Fig. 19 is a diagram that illustrates a first example of the array of dots formed by the image forming apparatus according to the first to fourth embodiments;
Fig. 20 is a diagram that illustrates a second example of the array of dots formed by the image forming apparatus according to the first to fourth embodiments;
Fig. 21 illustrates a third example of the array of dots formed by the image forming apparatus according to the first to fourth embodiments; and
Fig. 22 is a diagram that illustrates the effect of "blurring" that is performed by dispersing the dots in the overlapped boundary area in a conventional multi-pass method.

### DETAILED DESCRIPTION OF THE PREFERRED EMBODIMENTS

Exemplary embodiments of the present invention are explained in detail below with reference to the accompanying drawings.

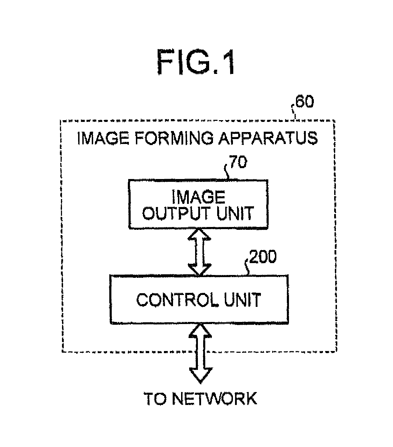

Fig. 1 is a block diagram that illustrates the configuration of an image forming apparatus according to a first embodiment.

An image forming apparatus 60 includes an image output unit 70 with an ink-jet serial-type recording head and includes a control unit 200 that receives image data from an external device, such as a host computer, via a communication cable and causes the image output unit 70 to print out the received image data.

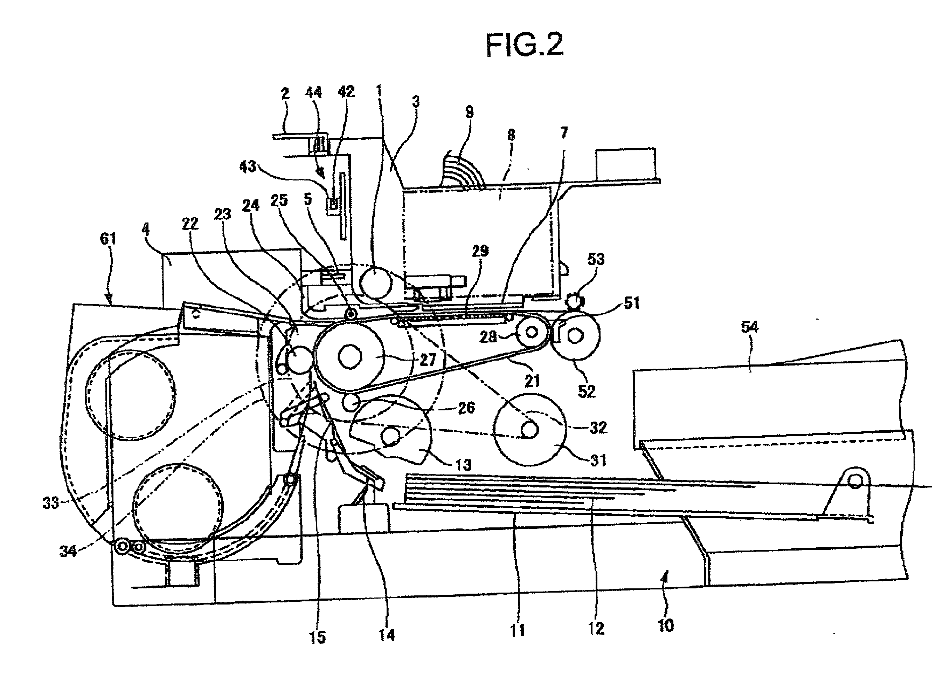

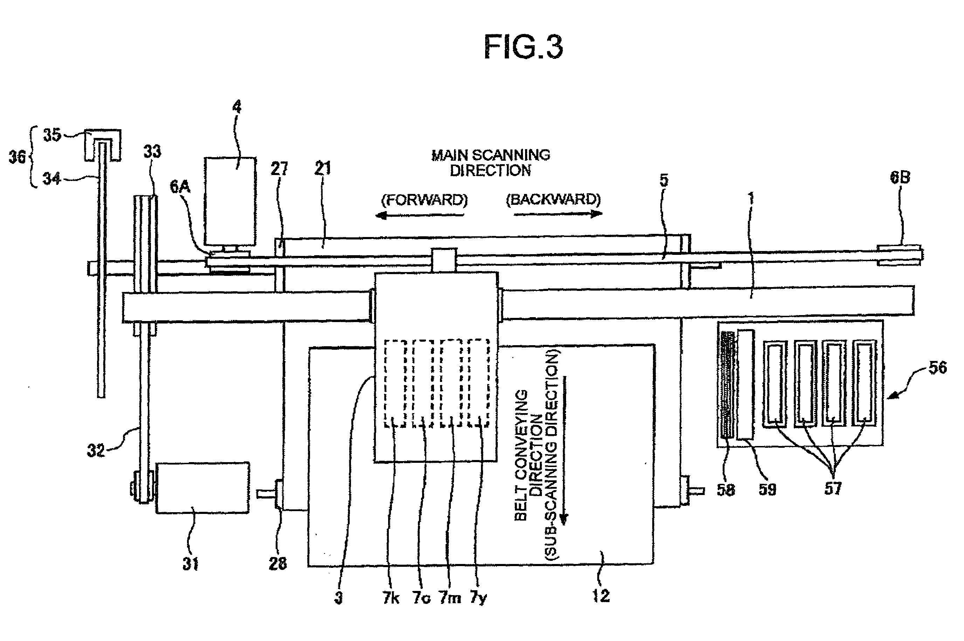

Fig. 2 is a side view that illustrates a configuration of a mechanical part of the image output unit 70, and Fig. 3 is a plan view of the mechanical part.

The image output unit 70 holds a carriage 3 with using a guide rod 1 and a guide rail 2, which are guide members laid laterally between undepicted right and left side plates. The carriage 3 is held slidably in the main scanning direction and is moved for scanning by a main-scanning motor 4, which is a recording-head scanning unit, in the direction (the main scanning direction) indicated by the arrow in Fig. 3 via a timing belt 5 that extends between a drive pulley 6A and a follower pulley 6B.

The carriage 3 includes four recording heads 7y, 7c, 7m, and 7k (referred to as a "recording head 7" when there is no need to make distinction between colors), which are the liquid ejection heads that eject ink droplets in, for example, yellow (Y), cyan (C), magenta (M), and black (K), respectively. The ink ejection openings of the recording heads 7y, 7c, 7m, and 7k are arranged in a direction that intersects with the main scanning direction, and the ink droplets are ejected downward. The carriage 3 has a sub-tank 8 for each color, and each sub-tank 8 feeds its color ink to the recording head 7. An undepicted main tank (ink cartridge) supplies ink to the sub-tank 8 via an ink supply tube 9.

As the liquid ejection head constituting the recording head 7, there may be used a head using a various types of actuator as a pressure generating unit to generate a pressure to eject ink droplet, including a piezoelectric actuator based on a piezoelectric element; a thermal actuator utilizing a phase transition of liquid based on film boiling with an electrothermal conversion element such as a heating resistance element; a shape-memory alloy actuator based on a phase transition of metal along with a temperature change; and a electrostatic actuator based on electrostatic power. The present embodiment is not limited to the configuration of the heads separately arranged for respective colors. The head may include one or more head members (liquid ejection heads) that have a nozzle array that includes multiple nozzles that eject multiple color droplets, respectively.

A feed unit that feeds a sheet 12 of recording medium such as paper that is placed on a sheet placement unit (pressure plate) 11 of a feed cassette 10, or the like, includes a semicircular roller (feed roller) 13 that separates and feeds the sheets 12 one by one from the sheet placement unit 11; and includes a separation pad 14 that is opposed to the feed roller 13 and is made of a material that has a higher coefficient of friction than the feed roller 13. The separation pad 14 is biased toward the feed roller 13.

A conveying unit that conveys the sheet 12 fed from the feed unit under the recording head 7 includes a conveyance belt 21 that conveys the sheet 12 while the sheet 12 is electrostatically absorbed thereto; a counter roller 22 that conveys the sheet 12 conveyed from the feed unit via a guide 15, while the sheet 12 is sandwiched between the counter roller 22 and the conveyance belt 21; a conveyance guide 23 that changes the direction of the sheet 12, which is conveyed upward in an almost vertical direction, by about 90° so that the sheet 12 follows the conveyance belt 21; and a pressing roller 25 that is biased toward the conveyance belt 21 by a pressing member 24. Furthermore, a charging roller 26 is provided, which is a charging unit that charges the surface of the conveyance belt 21.

The conveyance belt 21 is an endless belt that is extended between a conveyance roller 27 and a tension roller 28. The conveyance roller 27 is rotated by a sub-scanning motor 31 via a timing belt 32 and a timing roller 33 so that the conveyance belt 21 is rotated in the belt conveying direction (sub-scanning direction) illustrated in Fig. 2. A guide member 29 is disposed on the rear side of the conveyance belt 21 at an area corresponding to the image formation area of the recording head 7. The charging roller 26 is disposed such that the charging roller 26 is in contact with the surface of the conveyance belt 21 and is rotated along with the rotation of the conveyance belt 21.

As illustrated in Fig. 3, a circular plate 34 having a slit is attached to the shaft of the conveyance roller 27. A sensor 35 is arranged for detecting the slit of the circular plate 34. Thus, the circular plate 34 and the sensor 35 constitute a rotary encoder 36.

A discharge unit that discharges the sheet 12 already printed by the recording head 7 includes a separation claw 51 that separates the sheet 12 from the conveyance belt 21; a discharge roller 52 (*haishi roller*)*;* a discharge guide roller 53 (*haishi koro*); and a discharge tray 54 on which the discharged sheet 12 is stacked.

A two-sided feed unit 61 is attached to the image forming apparatus in a removable manner. The two-sided feet unit 61 receives the sheet 12 through the reverse rotation of the conveyance belt 21 and reverses (turns over) the sheet 12 to feed again in between the counter roller 22 and the conveyance belt 21.

Furthermore, as illustrated in Fig. 3, a maintaining/restoring mechanism 56 is disposed at a non-printable area on one of the sides of the carriage 3 in the main scanning direction. The maintaining/restoring mechanism 56 maintains and restores the states of the nozzles of the recording head 7.

The maintaining/restoring mechanism 56 includes a cap 57 that caps each nozzle surface of the recording head 7; a wiper blade 58 that is a blade member for wiping the nozzle surface; a mock ejection receiver 59 that receives droplets when a mock ejection is performed to eject droplets that do not contribute to recording, for the purpose of discharging any thickened recording liquid.

In the image forming apparatus that is configured as described above, the sheets 12 are separated one by one and fed from the feed unit, fed upward in an almost vertical direction, guided by the guide 15, and sandwiched between the conveyance belt 21 and the counter roller 22 so as to be conveyed. Furthermore, the leading edge of the sheet 12 is guided by the conveyance guide 23 and pressed against the conveyance belt 21 by the pressing roller 25 so that the conveying direction is changed by about 90°.

An undepicted control unit causes an AC bias supply unit to apply to the charging roller 26 an alternating voltage in which positive and negative voltages are alternately repeated, whereby the conveyance belt 21 is charged with an alternating charged voltage pattern, i.e., with a pattern in which the positive and negative voltages are alternately repeated at a predetermined width in the sub-scanning direction, which is the rotation direction. When the sheet 12 is fed to the charged conveyance belt 21, the sheet 12 is electrostatically absorbed to the conveyance belt 21 and is conveyed in the sub-scanning direction due to the rotation of the conveyance belt 21.

The recording head 7 is driven in accordance with image signals while the carriage 3 is moved in a forward direction or a backward direction, whereby the ink droplets are ejected onto the stopped sheet 12 for recording one line and, after the sheet 12 is conveyed for a predetermined distance, for recording the next line. When a recording termination signal is received or when a signal that indicates that the trailing edge of the sheet 12 has reached a recording area is received, the recording operation is terminated and the sheet 12 is discharged into the eject tray 54.

For two-sided printing, when the recording for the front surface (the first surface on which printing is performed) is finished, the conveyance belt 21 is rotated in the opposite direction so that the recorded sheet 12 is conveyed to the two-sided feed unit 61. Then, the sheet 12 is turned over (a state where the back surface is the print surface) and fed into the gap between the counter roller 22 and the conveyance belt 21 again. After the timing has been controlled, the sheet 12 is conveyed to the conveyance belt 21 in the same manner as described above so that the recording is performed on the back surface, and the sheet 12 is then discharged into the discharge tray 54.

The carriage 3 is moved toward the maintaining/restoring mechanism 56 while in a standby state for printing (recording), and the nozzle surface of the recording head 7 is capped by the cap 57 so that the wet state of the nozzle is maintained, which prevents ejection failure due to the ink drying. Furthermore, a recovery operation is performed by sucking out the recording liquid from the nozzle while the recording head 7 is capped by the cap 57 so that thickened recording liquid or air bubbles are eliminated. The wiper blade 58 performs wiping so as to remove ink that adheres to the nozzle surface of the recording head 7 because of the recovery operation. Moreover, before the start of recording or in the middle of recording, a mock ejection operation is performed so as to eject ink that does not contribute to recording. Thus, the stable eject performance of the recording head 7 is maintained.

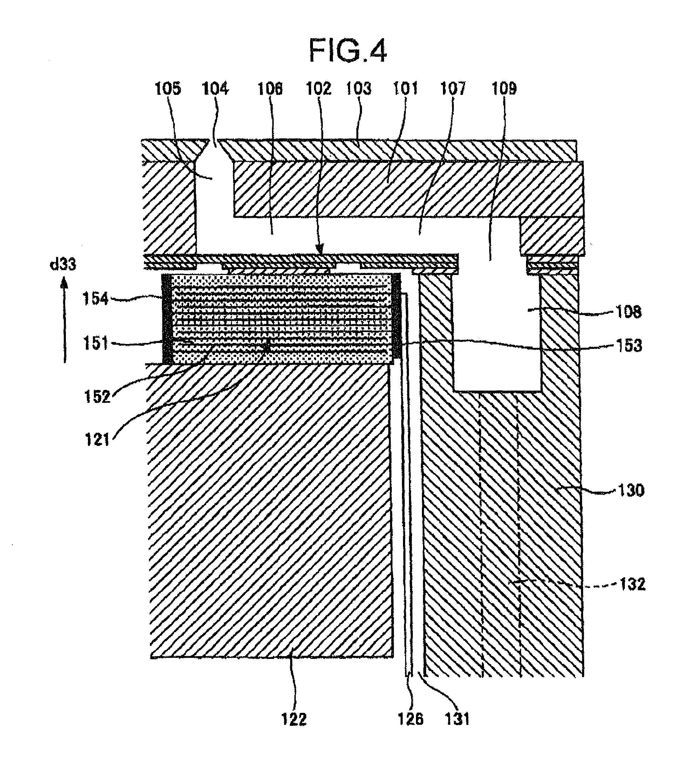

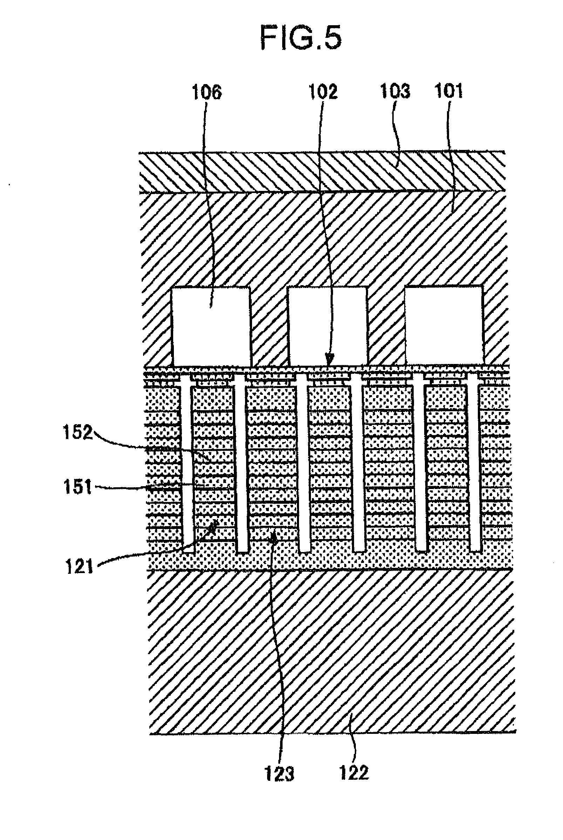

Next, an explanation is given, with reference to Figs. 4 and 5, of an example of the liquid ejection head included in the recording head 7.

Fig. 4 is a cross-sectional view of the liquid ejection head taken in the longitudinal direction of a liquid chamber, and Fig. 5 is a cross-sectional view of the liquid ejection head taken in the lateral direction of the liquid chamber (a direction along with nozzles are arrayed).

The liquid ejection head is formed by bonding and laminating a flow path plate 101, which is formed by performing anisotropic etching on, for example, a monocrystal silicon substrate; a vibration plate 102, which is formed from, for example, electroforming nickel and is bonded to the bottom surface of the flow path plate 101; and a nozzle plate 103 that is bonded to the upper surface of the flow path plate 101. The flow path plate 101, the vibration plate 102, and the nozzle plate 103 form a nozzle communication path 105, which is a flow path that communicates with a nozzle 104 that ejects liquid droplets (ink droplets); a liquid chamber 106 that is a pressure generating chamber; and an ink supply opening 109 that communicates with a common liquid chamber 108 that supplies ink to the liquid chamber 106 through a liquid resistance portion (supply path) 107.

The liquid ejection head is further provided with: a laminated piezoelectric elements 121 that are arranged in double lines and function as electromechanical conversion elements that are pressure generating units (actuator units) for deforming the vibration plate 102 so as to apply pressure to the ink within the liquid chamber 106; and a base substrate 122 to which the piezoelectric elements 121 are bonded and fixed. A strut member 123 is disposed between the piezoelectric elements 121. The strut member 123 is formed by dividing a piezoelectric element material at the same time the piezoelectric element 121 is formed; however, because a drive voltage is not applied to the strut member 123, the strut member 123 functions simply as a strut.

Furthermore, an FPC cable 126, on which an undepicted drive circuit (drive IC) is mounted, is connected to the piezoelectric element 121.

The circumferential portion of the vibration plate 102 is bonded to a frame member 130. The frame member 130 has recessed portions, which are the common liquid chamber 108 and a penetration section 131 that contains an actuator unit including the piezoelectric elements 121 and the base substrate 122, and has an ink supply opening 132 through which ink is supplied to the common liquid chamber 108 from outside. The frame member 130 is made of, for example, a thermo-setting resin, such as an epoxy resin, or polyphenylene sulfide and is formed by injection molding.

Anisotropic etching is performed on a single-crystal silicon substrate with, for example, the crystal face orientation (110) by using an alkaline etching liquid, such as potassium hydroxide aqueous solution (KOH), whereby the recessed portions and openings, such as the nozzle communication path 105 and the liquid chamber 106, are formed on the flow path plate 101. Not only a single-crystal silicon substrate, but also other stainless substrates or photosensitive resins may be used.

The vibration plate 102 is formed from a metallic nickel plate by using, for example, an electroforming technique. In addition, a metallic plate or a joint member made of metal and resin plate may be used. The piezoelectric elements 121 and the strut member 123 are bonded to the vibration plate 102 with an adhesive agent, and the frame member 130 is further bonded to the vibration plate 102 with an adhesive agent.

The nozzle 104 of 10 to 30 µm in diameter is formed on the nozzle plate 103 for each of the liquid chambers 106, and the nozzle plate 103 is bonded to the flow path plate 101 with an adhesive agent. The nozzle plate 103 is obtained by forming a water-repelling layer on the outermost surface of a nozzle formation member, which is a metallic member, with a required layer interposed therebetween.

The piezoelectric element 121 is a laminated piezoelectric element (here, PZT) that is obtained by alternately laminating a piezoelectric material 151 and an internal electrode 152. Each of the internal electrode 152 extends to the opposite edge surface of the piezoelectric element 121 and is connected to any one of an individual electrode 153 and a common electrode 154. According to the present embodiment, a configuration is such that pressure is applied to the ink within the liquid chamber 106 by using the displacement in the direction indicated by d33, which is the piezoelectric direction of the piezoelectric element 121; however, a configuration may be such that pressure is applied to the ink within the pressure liquid chamber 106 by using the displacement in the direction indicated by d31, which is the piezoelectric direction of the piezoelectric element 121. Furthermore, a configuration may be such that the piezoelectric elements 121 are arranged in a row on a single base substrate 122.

In the liquid ejection head that is configured as described above, for example, the voltage applied to the piezoelectric element 121 is reduced from the reference potential so that the piezoelectric element 121 contracts, and the vibration plate 102 moves downward so that the volume of the liquid chamber 106 increases. Thus, the ink flows into the liquid chamber 106 and, afterwards, the voltage applied to the piezoelectric element 121 is increased so that the piezoelectric element 121 expands in the lamination direction. Thus, the vibration plate 102 is deformed toward the nozzle 104 so that the volume of the liquid chamber 106 decreases and then pressure is applied to the recording liquid within the liquid chamber 106, whereby the recording liquid droplets are ejected from the nozzle 104.

The voltage applied to the piezoelectric element 121 is returned to the reference potential so that the vibration plate 102 returns to the initial position, and then the liquid chamber 106 expands, which generates a negative pressure. At that time, the liquid chamber 106 is filled with the recording liquid fed from the common liquid chamber 108. After the vibration of the meniscus surface of the nozzle 104 is attenuated and the nozzle 104 becomes stable, the process proceeds for the subsequent liquid discharging operation.

A method for driving the liquid ejection head is not limited to that described above (extracting and pressing). Extracting or pressing may be performed by changing a way of setting the drive waveforms.

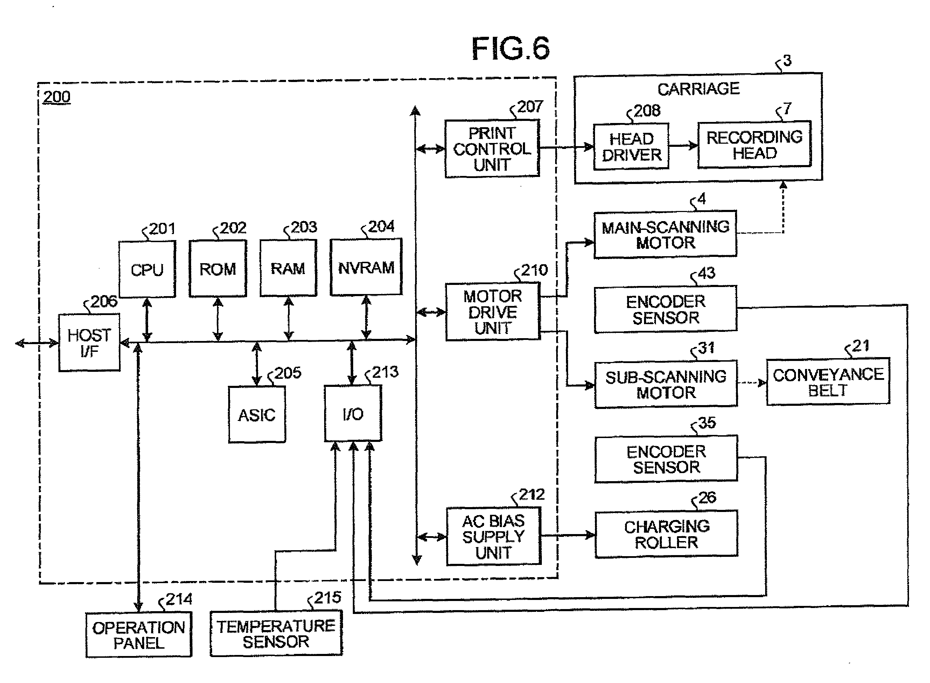

Fig. 6 is a block diagram that illustrates the configuration of the control unit 200.

The control unit 200 includes a CPU 201, which controls the overall apparatus; a ROM 202 that stores therein programs executed by the CPU 201 and fixed data; a RAM 203 that temporarily stores therein image data, and the like; a nonvolatile rewritable memory 204 that stores data while the power of the apparatus is turned off; and an ASIC 205 that performs various types of signal processing on image data, performs image processing, such as sorting, and performs input/output signal processing to control the overall apparatus. The image forming apparatus includes a head driver IC 208 that drives the recording head 7 installed in the carriage 3.

The control unit 200 further includes an I/F 206 that receives and transmits data and signals to and from a host; a print control unit 207 that includes a data transfer unit that drives and controls the recording head 7 and a drive-waveform generating unit that generates drive waveforms; a motor drive unit 210 that drives the main-scanning motor 4 and the sub-scanning motor 31; an AC bias supply unit 212 that supplies AC bias to the charging roller 26; and I/O 213 that inputs detection signals received from encoder sensors 43, 35, and detection signals received from various sensors, such as a temperature sensor 215 that detects the ambient temperature.

Furthermore, the control unit 200 is connected to an operation panel 214 that receives and displays information necessary for the image forming apparatus. A host I/F 206 of the control unit 200 receives, via a cable or network, image data, and the like, from a host, for example, an information processing apparatus, such as a personal computer, an image read device, such as an image scanner, and an image taking device, such as a digital camera.

The CPU 201 of the control unit 200 reads and analyzes image data stored in a receiver buffer included in the host I/F 206, the ASIC 205 performs necessary image processing, data sort processing, or the like, and the print control unit 207 transfers print data, on which the above processes have been performed, to the head driver 208. As described later, a printer driver of the host may generate dot pattern data (print data) to output an image.

The print control unit 207 transfers to the head driver 208 the above-described print data as serial data and also outputs to the head driver 208 transfer clocks, which are necessary for print data transfer and for transfer determination, latch signals, and droplet control signals (mask signals). The print control unit 207 includes a drive-waveform selecting unit that feeds pattern data on drive signals stored in the ROM 202 to a drive-waveform generating unit, which includes a D/A converter that performs D/A conversion, a current amplifier, and a voltage amplifier, and to the head driver 208. The print control unit 207 generates a drive waveform that includes a single drive pulse (drive signal) or multiple drive pulses (drive signals) and outputs the drive waveform to the head driver 208.

The head driver 208 selectively applies a drive signal, which includes a drive waveform fed from the print control unit 207 in accordance with serially input print data corresponding to one stripe noise of the recording head 7, to a drive element (e.g., the above-described piezoelectric element), which generates energy to eject the droplets of the recording head 7, whereby the recording head 7 is driven. At that time, a drive pulse that is included in the drive waveform is selected so that it is possible to make dots of different sizes, such as a large droplet (large dot), a medium droplet (medium dot), and a small droplet (small dot).

The CPU 201 calculates a drive output value (control value) for the main-scanning motor 4 by using a speed detection value and a position detection value, which are obtained by sampling a detection pulse received from the encoder sensor 43 included in a linear encoder and by using a speed target value and a position target value, which are obtained from pre-stored speed/position profiles. The CPU 201 then drives the main-scanning motor 4 via the motor drive unit 210. Similarly, the CPU 201 calculates a drive output value (control value) for the sub-scanning motor 31 by using a speed detection value and a position detection value, which are obtained by sampling a detection pulse received from the encoder sensor 35 included in the rotary encoder 36 and by using a speed target value and a position target value, which are obtained from pre-stored speed/position profiles. The CPU 201 then drives the sub-scanning motor 31 via the motor drive unit 210 and a motor driver.

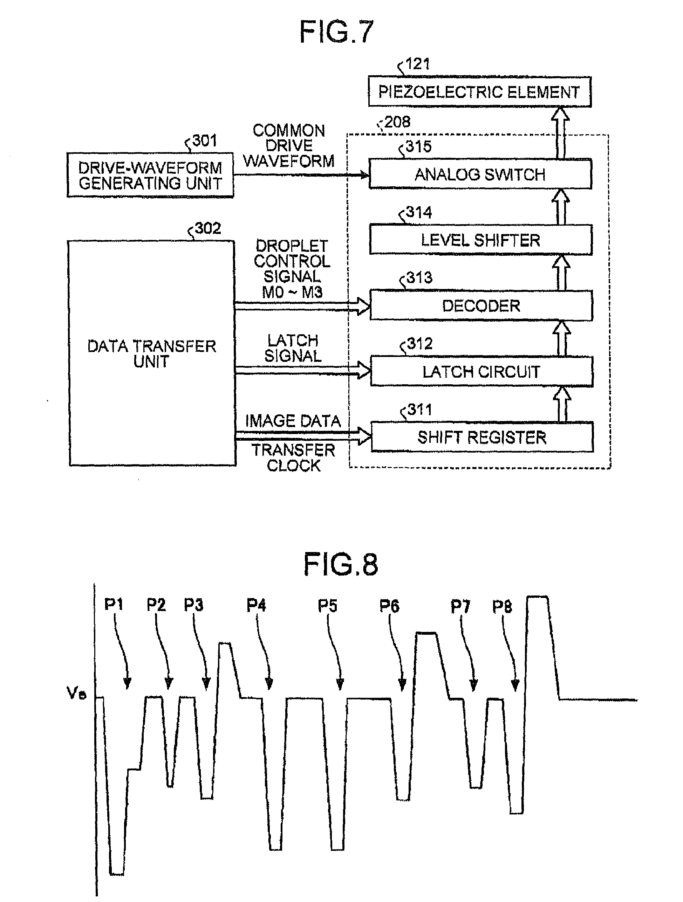

Fig. 7 is a block diagram that illustrates the exemplary configuration of the print control unit 207 and the head driver 208.

As described above, the print control unit 207 includes a drive-waveform generating unit 301 that generates and outputs a drive waveform (common drive waveform) that includes multiple drive pulses (drive signals) within one print cycle; and a data transfer unit 302 that outputs 2-bit print data (gradation signals 0, 1) corresponding to a printed image, clock signals, latch signals (LAT), and droplet control signals M0 to M3.

A droplet control signal is a 2-bit signal that commands, for each droplet, switching on/off of an analog switch 315, which is a switch unit of the head driver 208, described later. The state of the droplet control signal is changed to the H level (ON) due to a waveform to be selected in accordance with a print cycle of a common drive waveform and is changed to the L level (OFF) while it is not selected.

The head driver 208 includes a shift register 311 that receives transfer clocks (shift clocks) and serial print data (gradation data: 2 bits/CH) from the data transfer unit 302; a latch circuit 312 that latches each registration value of the shift register 311 by using a latch signal; a decoder 313 that decodes gradation data and the droplet control signals M0 to M3 and outputs the result; a level shifter 314 that converts the level of a logic level voltage signal of the decoder 313 to such a level that the analog switch 315 can be operated; and the analog switch 315 that is switched on/off due to the output from the decoder 313 that is fed via the level shifter 314.

The analog switch 315 is connected to the selected electrode (individual electrode) 153 of each of the piezoelectric elements 121 and receives a common drive waveform from the drive-waveform generating unit 301. Therefore, the analog switch 315 is switched on in accordance with the result that is obtained by the decoder 313 that decodes the serially transferred print data (gradation data) and the droplet control signals M0 to M3 so that a required drive signal that is included in the common drive waveform is passed through (selected) so as to be applied to the piezoelectric element 121.

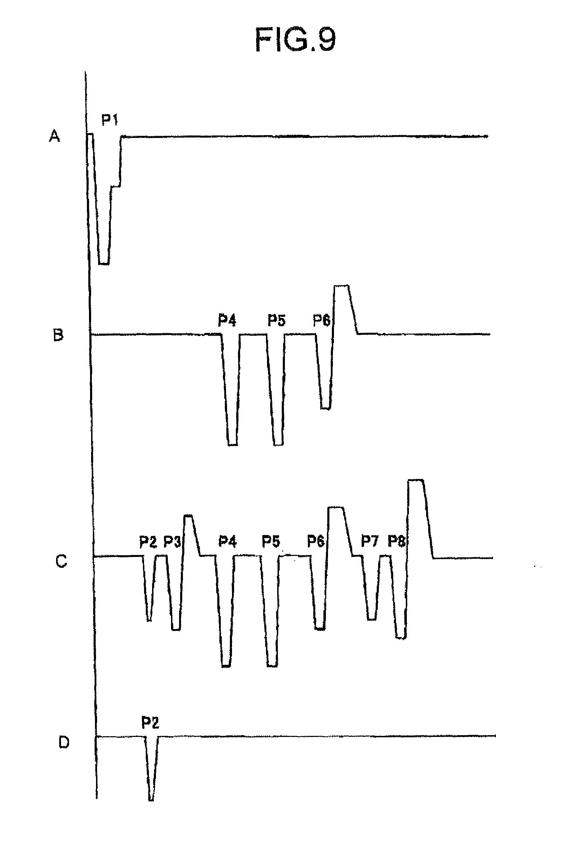

Next, an explanation is given, with reference to Figs. 8 and 9, of a drive signal that is applied to the piezoelectric element 121.

Fig. 8 is a diagram that illustrates a common drive waveform generated by the drive-waveform generating unit 301, and Fig. 9 is a diagram that illustrates each drive signal that is selected from the drive waveform illustrated in Fig. 8 by the analog switch 315 and that is for a small droplet, a medium droplet, a large droplet, and micro driving.

As illustrated in Fig. 8, the drive-waveform generating unit 301 generates and outputs a drive waveform (drive signal) that includes, within one print cycle (one drive cycle), eight drive pulses P1 to P8 that include a waveform element that falls below the reference potential Ve and include a waveform element that falls and then rises. A drive pulse to be used is selected in accordance with the droplet control signal M0 to M3 received from the data transfer unit 302. A waveform element that is obtained when the potential V of the drive pulse rises above the reference potential Ve is an extracting waveform element that causes the piezoelectric element 121 to contract so that the volume of a pressure liquid chamber (not illustrated) is increased. Furthermore, a waveform element that falls and then rises is a pressing waveform element that causes the piezoelectric element 121 to expand so that the volume of the pressure liquid chamber is decreased.

In accordance with the droplet control signals M0 to M3 received from the data transfer unit 302, the drive pulse P1 illustrated in "A" of Fig. 9 is selected to form a small droplet (small dot), the drive pulses P4 to P6 illustrated in "B" of Fig. 9 are selected to form a medium droplet (medium dot), the drive pulse P2 to P8 illustrated in "C" of Fig. 9 are selected to form a large droplet (large dot), and the drive pulse P2 illustrated in "D" of Fig. 9 is selected for micro driving (vibrating the meniscus without discharging droplets). Then, each drive pulse is applied to the piezoelectric elements 121 of the recording head 7.

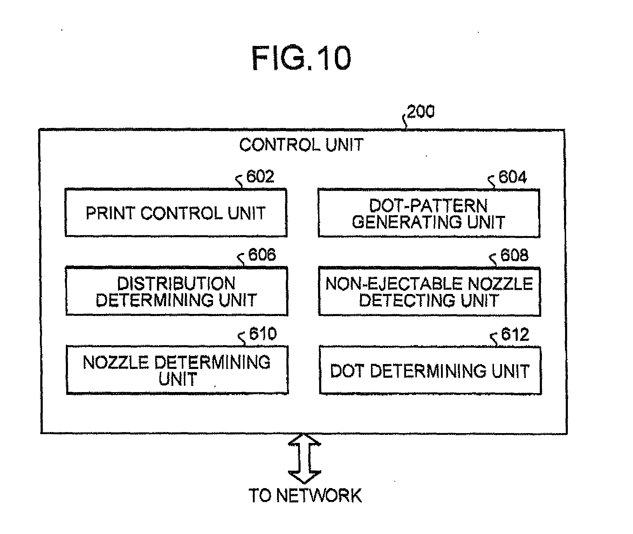

Next, an explanation is given of the function realizing units included in the control unit 200 with reference to Fig. 10.

Each unit illustrated in Fig. 10 is a function performing unit of the control unit (computer) 200 that is performed by the CPU 201 that executes a program. A computer program can be stored in any storage medium that is readable by a computer.

The control unit 200 includes a print control unit 602 that controls an operation of the image output unit 70 so as to perform a printing operation; and a dot-pattern generating unit 604 that generates the array of dots (dot pattern) to be formed by each nozzle of the recording head 7 in accordance with the print data received by the host I/F 206 together with the print command.

Furthermore, the control unit 200 includes a distribution determining unit 606 that determines, during each scanning operation of the recording head 7, the distribution of dots to be formed on the above-described overlapped boundary area. A method for determining the distribution of dots may include, for example, determining a dot formation position in the overlapped boundary area at every scan by using random numbers or include determining the distribution of dots by using a mask pattern. The mask pattern refers to a table that includes cells corresponding to the positions of respective dots within the overlapped boundary area and that has each cell assigned to a reference mark for identifying a scanning operation to form the corresponding dot.

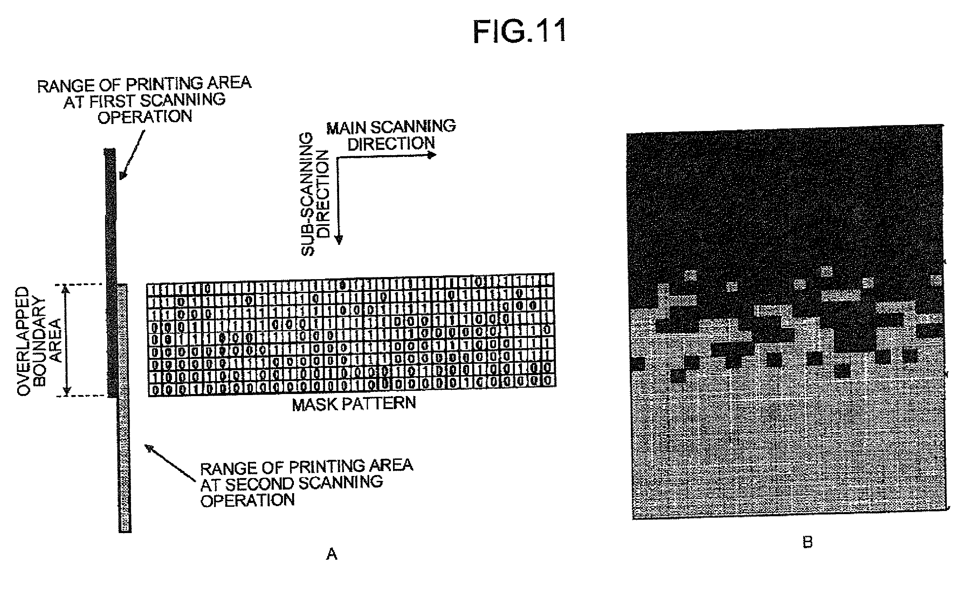

Fig. 11 is a diagram that illustrates an exemplary mask pattern to be used by the distribution determining unit 606.

The two bars, white and black bars, illustrated in the left side of section "A" of Fig. 11 indicate the ranges of printing areas for two scanning operations. The bars indicate the ranges of printing areas that are formed by the first and second scanning operations. The area where the black and white bars are overlapped with each other is an overlapped boundary area of the two printing areas. The mask pattern illustrated in the right side of section "A" of Fig. 11 is generated for the overlapped boundary area.

Each cell of the mask pattern corresponds to the position of each dot formed in the overlapped boundary area. Each cell has a number described in order to identify a scanning operation to form the dot at that position. For example, if the number "1" is described, the dot at the position corresponding to the cell is formed during the first scanning operation. If the number "0" is described, the dot is formed during the second scanning operation. As a result, the dots are formed as illustrated in section "B" of Fig. 11 in the overlapped boundary area and the printing areas located above (in the figure) and under (in the figure) the overlapped boundary area.

The control unit 200 further includes: a non-ejectable nozzle detecting unit 608 that detects the presence or absence of a non-ejectable nozzle in the recording head 7 and, if there is a non-ejectable nozzle, specifies the position of the non-ejectable nozzle; a nozzle determining unit 610 that selects an alternative nozzle to the detected non-ejectable nozzle if the non-ejectable nozzle is to be used for forming an image in the overlapped boundary area; and a dot determining unit 612 that determines the size or density of complementary dots that are formed by an alternative nozzle, on the basis of the printing position of the alternative nozzle in the overlapped boundary area and the dot distribution determined by the distribution determining unit 606.

A method of detecting the non-ejectable nozzle by the non-ejectable nozzle detecting unit 608 may be for example a method of detecting whether the ink is ejected from a nozzle by detecting an intensity change of a light beam when causing nozzle to eject ink by means of a light source for emitting the light beam across in front of the ejection opening of each nozzle of the head 7 and a photoreceptor for receiving the light beam (for example, see Japanese Patent Application Laid-open No. 2007-296670), or may be a method of detecting whether the ink is ejected from a nozzle by printing a test pattern in advance with using a recording head and detecting any dot defect (any missing dot) in the test pattern with using an optical sensor or the like (for example, see Japanese Patent Application Laid-open No. 2010-23459).

If the image forming apparatus 60 configured as described above detects a non-ejectable nozzle in an overlapped boundary area of adjacent printing areas, each printing area formed at every scan by the recording head 7, the image forming apparatus 60 determines an alternative nozzle of the detected non-ejectable nozzle. The apparatus 60 determines the size or density of "complementary" dots to be formed by the alternative nozzle, on the basis of the printing position of the alternative nozzle in the overlapped boundary area and on the basis of the dot distribution determined by the distribution determining unit 606.

Thus, it is possible to control the image density of the "complementary" image made of complementary dots so as to be the same level as the image density of the image around the complementary image. Thereby, the stripe noise can be prevented from appearing on the printed image.

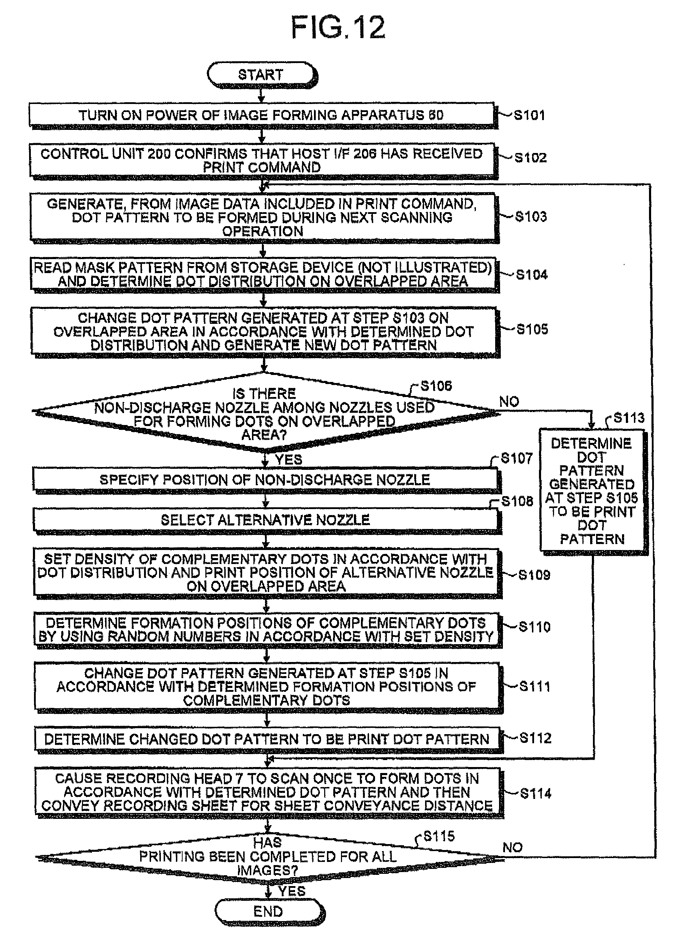

Next, an explanation is given of the steps of an operation performed by the image forming apparatus 60 with reference to the flowchart illustrated in Fig. 12.

First, when a user turns on the power of the image forming apparatus 60 (Step S101), the control unit 200 confirms that the host I/F 206 has received a print command (Step S102). Then, the dot-pattern generating unit 604 generates, from the image data included in the print command, the array of dots (dot pattern) on a printing area that is formed on a recording medium during the next scanning operation (Step S103).

Next, the distribution determining unit 606 reads a mask pattern that is pre-stored in a storage device (not illustrated) such as a RAM, and determines the distribution of dots to be formed in the overlapped boundary area during each scanning operation, specifically, the positions where dots are to be formed in the overlapped boundary area during each scanning operation (Step S104). On the basis of the determined dot distribution, the dot-pattern generating unit 604 changes the dot pattern generated at Step S103 in the overlapped boundary area so as to generate a new dot pattern (Step S105).

Then, the non-ejectable nozzle detecting unit 608 determines whether there is a non-ejectable nozzle among the nozzles to be used for forming dots in the overlapped boundary area (Step S106). If there is a non-ejectable nozzle (Yes at Step S106), the position of the non-ejectable nozzle is specified (Step S107), and the nozzle determining unit 610 determines an alternative nozzle (Step S108).

On the basis of the print position of the alternative nozzle determined at Step S108 in the overlapped boundary area and on the basis of the dot distribution determined at Step S104, the dot determining unit 612 determines the density of complementary dots to be formed by the alternative nozzle (Step S109) and determines the formation positions of the complementary dots by using random numbers so that the complementary dots are formed at the determined density (Step S110).

A method for determining the density of complementary dots may be as follows. Changes in the densities of the peripheral images, which are located on both sides of the area where the complementary dots are formed, are obtained as, for example, a density curve. This density curve is interpolated so that the density to be applied to the area where the complementary dots are formed is obtained. Afterwards, in order to obtain that density, the density of dots is determined. The positions where complementary dots are formed are determined by using random numbers because the complementary dots need to be uniformly distributed without being unevenly distributed.

After the formation positions of the complementary dots are determined at Step S110, the dot-pattern generating unit 604 changes the dot pattern, which has been generated at Step S105, on the basis of the determined formation positions of the complementary dots (Step S111) and determines the changed dot pattern to be a print dot pattern (Step S112).

On the other hand, if non-ejectable nozzle is not detected at Step S106 (No at Step S106), the dot pattern generated at Step S105 is determined to be a print dot pattern (Step S113).

Next, the print control unit 602 causes the recording head 7 to perform a scanning operation once so as to form dots in accordance with the determined print dot pattern and then conveys the recording medium in the sub-scanning direction for the sheet conveyance distance (Step S114). The sheet conveyance distance is fed to the image output unit 70 or the print control unit 602 in advance on the basis of the width of the printing area formed during one scanning operation of the recording head 7 and on the basis of the width of the overlapped boundary area that is desired by a user.

Next, the control unit 200 determines whether printing has been completed for all images (Step S115). If it has been completed (Yes at Step S115), the process is terminated. If it has not been completed (No at Step S115), the process is repeated from Step S103.

According to the present embodiment, the dot determining unit 612 determines the density of complementary dots (Step S109 illustrated in Fig. 12); however, the size of a complementary dot may be determined instead of the density. In this case, it is not necessary to determine the formation positions of complementary dots by using random numbers. Furthermore, if a recording head that includes a piezoelectric element is used, a method for adjusting the size of a complementary dot during its formation may include, for example, increasing or decreasing the amplitude of a voltage pulse or the number of pulses to be applied to the piezoelectric element, as described above.

The present embodiment uses a recording head that ejects ink when a piezoelectric element applies pressure to the ink; however, instead of this configuration of the head, a thermal head may be used, which ejects ink when a thermal element applies pressure to the ink.

Next, an explanation is given of an image forming apparatus according to a second embodiment.

In the image forming apparatus, the dot determining unit 612, which is included in the image forming apparatus 60 according to the first embodiment, does not set the density of complementary dots to determine the formation positions of the complementary dots (Steps S109 and S110 in Fig. 12). Instead, in accordance with the position of the non-ejectable nozzle identified by the non-ejectable nozzle detecting unit 608, the dot determining unit 612 reads the mask pattern, which is pre-stored in a storage device (not illustrated) and corresponds to the position of the non-ejectable nozzle, so as to determine the formation positions of complementary dots.

According to the present embodiment, it is possible to previously determine the degree of deterioration of a printed image obtained when complementary dots are formed by using an alternative nozzle for each position where a non-ejectable nozzle exists and thereby to determine the optimum array of complementary dots in order to eliminate the effect of the deterioration. Thus, when there is a non-ejectable nozzle, the optimum printed image can be obtained in a quick manner according to the position of the non-ejectable nozzle.

Next, an explanation is given of an image forming apparatus according to a third embodiment.

The image forming apparatus according to the third embodiment is provided with a line-type recording head that includes a plurality of head units, while the image forming apparatus 60 according to the first embodiment is provided with the serial-type recording head 7.

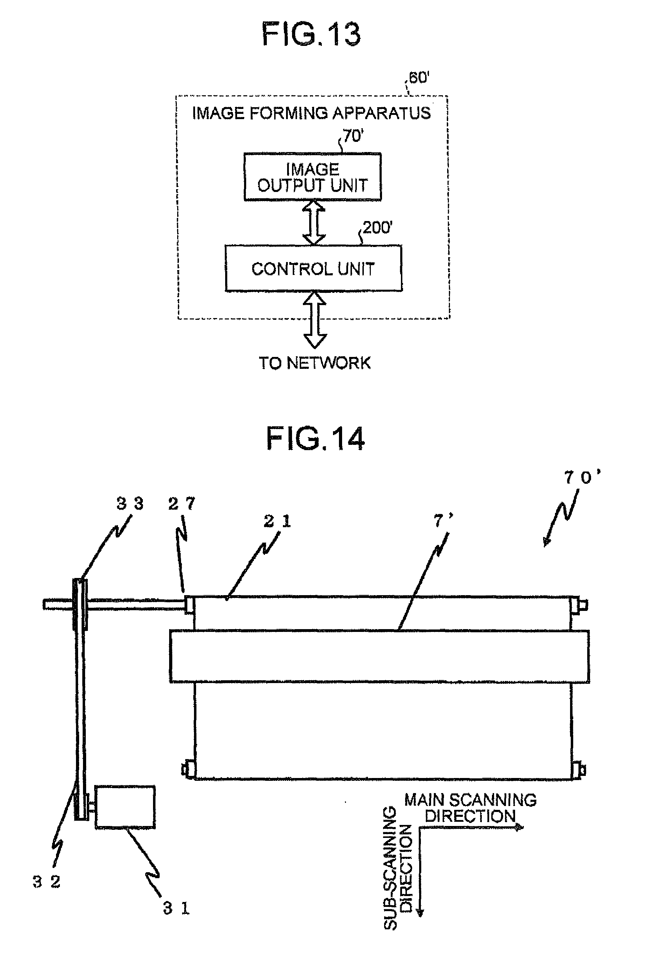

Fig. 13 is a block diagram that illustrates the configuration of an image forming apparatus 60' according to the present embodiment.

The image forming apparatus 60' includes an image output unit 70' with a line-type recording head and includes a control unit 200'.

Fig. 14 is a plan view that illustrates the configuration of a mechanical part of the image output unit 70'.

The image output unit 70' includes a line-type recording head 7'; the conveyance belt 21 that conveys a recording medium in a direction of the ink ejection by the recording head 7'; the sub-scanning motor 31 that rotates the conveyance belt 21; the timing roller 33 that is driven by the sub-scanning motor 31 via the timing belt 32; and the conveyance roller 27 that is rotated together with the timing roller 33.

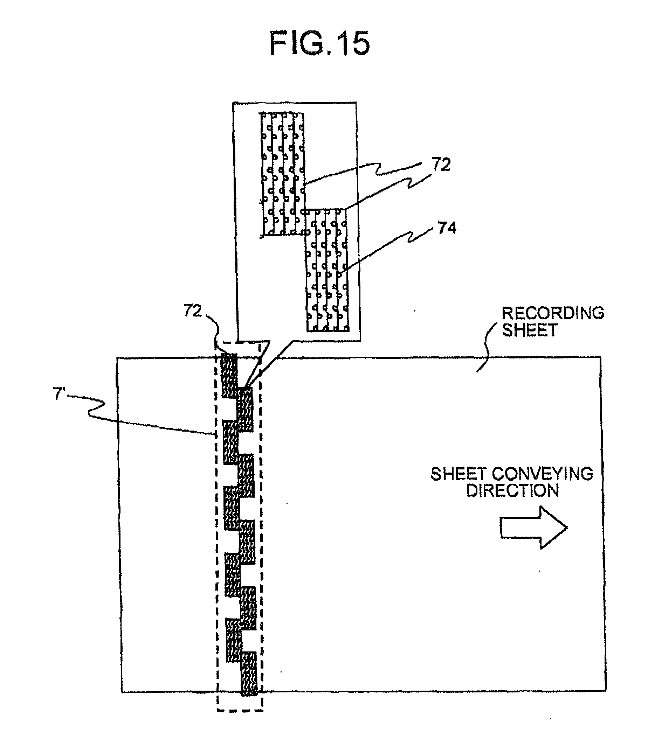

Fig. 15 is a diagram that illustrates the configuration of the recording head 7'.

The recording head 7' includes a plurality of head units 72. Each of the head units 72 includes multiple nozzles 74 that are arranged in a staggered manner. The head units 72 are arranged such that a part of the nozzles 74 included in the unit head 72 are overlapped in the main scanning direction with a part of the nozzles 74 of the adjacent unit head 72. Due to this overlapped arrangement, an overlapped boundary area is formed at the boundary of the printing areas that are formed on a recording medium by the head units 72.

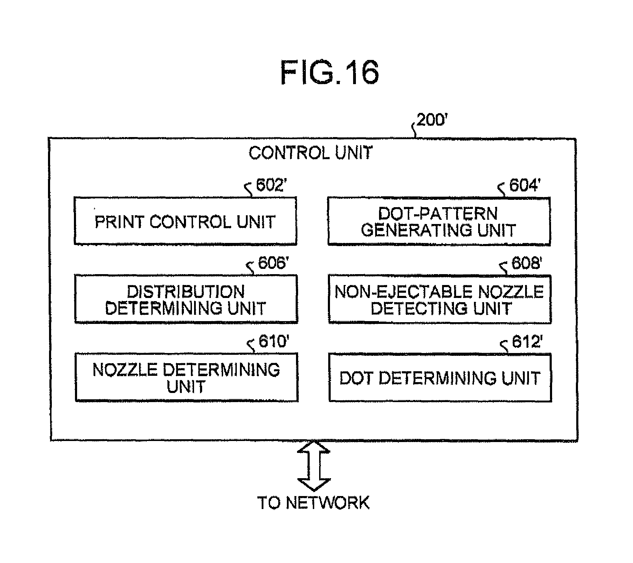

Next, an explanation is given, with reference to Fig. 16, of various function realizing units included in the control unit 200'.

The basic configuration of the control unit 200' is the same as the configuration (in Fig. 6) of the control unit 200 in the image forming apparatus 60 according to the first embodiment. However, the programs executed by the CPU 201 and various function realizing units included in the control unit 200' are different from those of the control unit 200, since the control unit 200' of the image forming apparatus 60' controls the line-type recording head 7'.

Fig. 16 is a functional block diagram that illustrates the function realizing units included in the control unit 200'_{.}

Each unit illustrated in Fig. 16 is a function realizing unit that is included in the control unit (computer) 200' and is operated when the CPU 201 executes a program. A computer program may be stored in any storage medium that is readable by a computer.

The control unit 200' includes a print control unit 602' that controls the operation of the image output unit 70' so as to perform a print operation; and a dot-pattern generating unit 604' that generates a dot pattern to be formed by each of the head units 72 included in the recording head 7' by using print data received by the host I/F 206.

The control unit 200' further includes a distribution determining unit 606' that determines, for each of the head units 72, the distribution of dots to be formed in the above-described overlapped boundary area; a non-ejectable nozzle detecting unit 608' that detects the presence or absence of a non-ejectable nozzle in each of the head units 72 and, if there is a non-ejectable nozzle, specifies the position of the non-ejectable nozzle; and a nozzle determining unit 610' that determines an alternative nozzle for the detected non-ejectable nozzle when the detected non-ejectable nozzle is for forming the image in the overlapped boundary area. An overlapped boundary area is formed by using two head units 72; therefore, if there is a non-ejectable nozzle in one of the head units 72 that form the overlapped boundary area, an alternative nozzle is selected from the nozzles in another of the head units 72 that form the overlapped boundary area.

The control unit 200' further includes a dot determining unit 612' that sets the size or density of complementary dots to be formed by an alternative nozzle on the basis of the print position of the alternative nozzle in the overlapped boundary area and on the basis of the dot distribution determined by the distribution determining unit 606'.

When detected any non-ejectable nozzle in the overlapped boundary area between the printing areas formed by the adjacent head units 72 of the recording head 7', the image forming apparatus 60', which has the above-described configuration, determines an alternative nozzle and determines the size or density of complementary dots to be formed by the alternative nozzle on the basis of the print position of the alternative nozzle in the overlapped boundary area and on the basis of the dot distribution determined by the distribution determining unit 606'.

In the image forming apparatus 60', in the same manner as the image forming apparatus 60 according to the first embodiment, the density of an image (complementary image) formed by using complementary dots can be nearly equal to the density of the image around the complementary image. Thereby, the stripe noise can be prevented from appearing on the printed image.

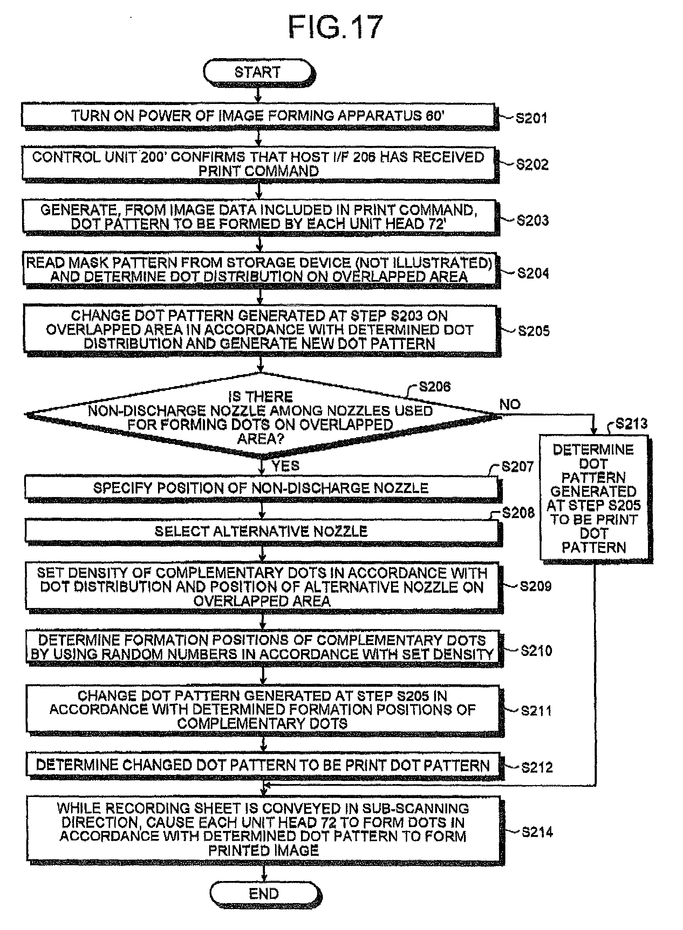

Next, an explanation is given of the steps of an operation performed by the image forming apparatus 60' with reference to the flowchart illustrated in Fig. 17.

First, when a user turns on the power of the image forming apparatus 60' (Step S201), the control unit 200' confirms that the host I/F 206 has received a print command (Step 5202). Then, the dot-pattern generating unit 604' generates, from the image data included in the print command, the array of dots (dot pattern) in a printing area that is formed on a recording medium by each of the head units 72 (Step S203).

Next, the distribution determining unit 606' reads a mask pattern that is pre-stored in a storage device (not illustrated), such as a RAM, and determines the distribution of dots for each overlapped boundary area (Step S204). On the basis of the determined dot distribution, the dot pattern generated at Step S103 in the overlapped boundary area is changed so as to generate a new dot pattern (Step S205).

Then, the non-ejectable nozzle detecting unit 608' determines whether there is a non-ejectable nozzle among the nozzles for forming dots in any one of the overlapped boundary areas (Step S206). If there is a non-ejectable nozzle (Yes at Step S206), the position of the non-ejectable nozzle is specified (Step S207), and the nozzle determining unit 610' determines an alternative nozzle (Step S208).

On the basis of the print position of the alternative nozzle determined at Step S208 in the overlapped boundary area and on the basis of the dot distribution determined at Step S204, the dot determining unit 612' determines the density of complementary dots to be formed by the alternative nozzle (Step S209) and determines the formation positions of the complementary dots by using random numbers so that the complementary dots are formed at the determined density (Step S210).

Next, the dot-pattern generating unit 604' changes the dot pattern, which has been generated at Step S205, on the basis of the determined formation positions of the complementary dots (Step S211) and determines the changed dot pattern to be a print dot pattern (Step S212).

On the other hand, if non-ejectable nozzle is not detected at Step S206 (No at Step S206), the dot pattern generated at Step S205 is determined to be a print dot pattern (Step S213).

Next, the print control unit 602' operates the image output unit 70' and, while a recording medium is conveyed in the sub-scanning direction, causes the nozzles of each of the head units 72 to form dots on the basis of the determined dot pattern so as to form a printed image on the recording medium (Step S214). The process is then terminated.

Next, an explanation is given of an image forming apparatus according to a fourth embodiment.

The image forming apparatus uses a serial-type elongated recording head that includes multiple head units as the serial-type recording head 7 in the image forming apparatus 60 according to the first embodiment, and complementary dots are formed in an overlapped boundary area between adjacent head units in the same manner as the third embodiment described above.

According to the fourth embodiment, the serial-type elongated recording head that uses multiple head units can prevent a stripe noise from appearing on a printed image if there is a non-ejectable nozzle, in the same manner as the image forming apparatus according to the first or third embodiment.

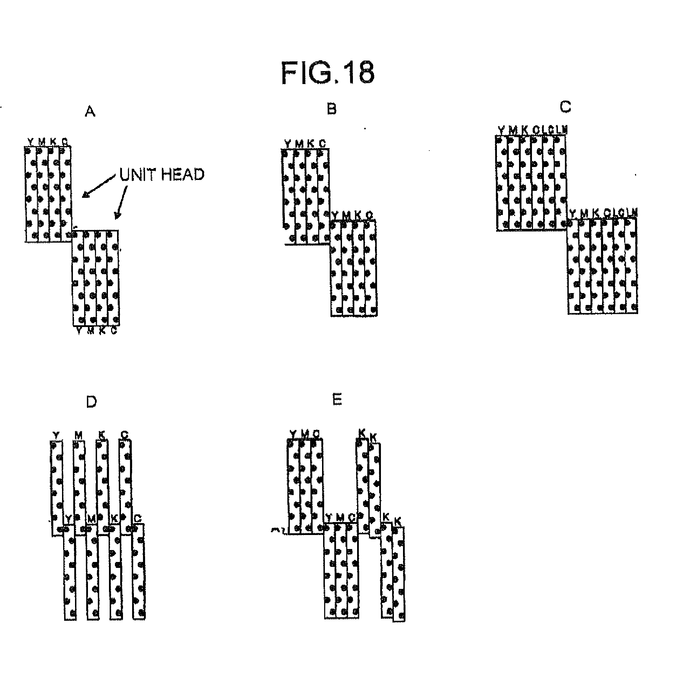

Fig. 18 is a diagram that illustrates exemplary arrangements of head units in a recording head that is applied to the present embodiment.

The exemplary recording head illustrated in "A" of Fig. 18 uses two head units, each of which includes nozzles for four colors, Y, M, C, and K, respectively. The lower end of one unit overlaps with the upper end of the other unit.

The recording head illustrated in "B" of Fig. 18 has a larger number of nozzles that are overlapped in the head units compared to the recording head illustrated in "A" of Fig. 18.

The exemplary recording head illustrated in "C" of Fig. 18 uses two head units that each includes the ink eject nozzles for six colors, i.e., light cyan (LC) and light magenta (LM) in addition to the four colors YMCK. The lower end of one unit overlaps with the upper end of the other unit.

The exemplary recording head illustrated in "D" of Fig. 18 uses two head units that each have a space interposed between the respective YMCK eject nozzles. The ink eject nozzle for each color in one unit is inserted into the space between the nozzles in the other unit.

The exemplary recording head illustrated in "E" of Fig. 18 uses two head units, each of which has two nozzles for ejecting K (black) ink. The two nozzles for ejecting K ink in the same unit are arranged such that the position of one nozzle is shifted in the vertical direction by half the nozzle interval of the other nozzle. Thus, the recording head can form K dots of twice the density as those in CMY (twice the resolution).

Generally, a stripe noise is likely to appear in an overlapped boundary area when using a recording head having head units with a large number of colors, as illustrated in "C" of Fig. 18, or head units with a larger number of nozzle arrays arranged side by side, as illustrated in "E" of Fig. 18. Therefore, this embodiment can be more advantageous in preventing the stripe noise.

Next, an explanation is given of the operation of the image forming apparatus according to the first to fourth embodiments.

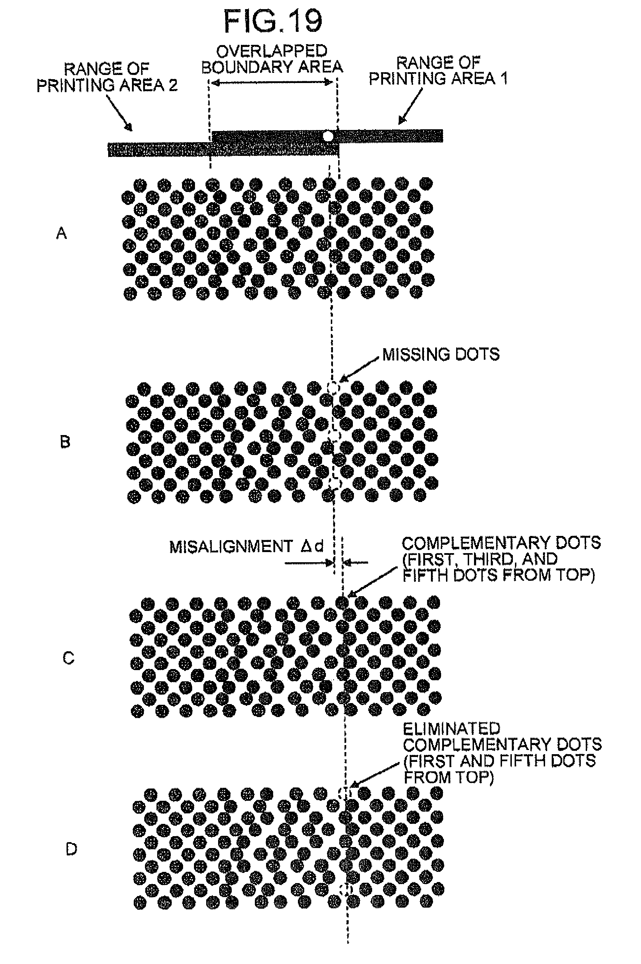

Fig. 19 is a diagram that illustrates a first example of the array of dots formed by the image forming apparatus according to the first to fourth embodiments.

The black and white bars illustrated on the upper side of Fig. 19 indicate the range of the printing area 1 (right-side in the figure) and the range of the printing area 2 (left-side in the figure), respectively. The area where the two bars are overlapped with each other is an overlapped boundary area. These printing areas are formed by two successive scanning operations according to the first embodiment or by the two adjacent head units 72 according to the third embodiment.

The dot distribution state of each area when there is no non-ejectable nozzle is illustrated in "A" of Fig. 19. Here, the dots included in the printing area 1 and the dots included in the printing area 2 are uniformly distributed in the overlapped boundary area (the dot distribution is determined by the distribution determining unit 606 in the first embodiment and is determined by the distribution determining unit 606' in the second embodiment).

The Fig. 19 illustrates, as "B", the dot distribution in a case that the nozzle located on the right end of the overlapped boundary area of the printing area 1 (illustrated as a while circle in the black bar in the top of the figure) is a non-ejectable nozzle and therefore the dots are missing in the overlapped boundary area. Fig. 19 illustrates, as "C", the dot distribution in a case that all missing dots are replaced with complementary dots (dots formed by an alternative nozzle) in a conventional method.

The dots included in the printing area 2 are shifted by the distance Δd to the right in Fig. 19 with respect to the dots included in the printing area 1. The position shift distance Δd corresponds to an error of the sheet conveyance distance in the sub-scanning direction in the first embodiment and corresponds to an assembly error of the unit head 72 in the main scanning direction in the second embodiment.

As illustrated in "C" of Fig. 19, the distance between a complementary dot and the right-side adjacent dot in the printing area 1 outside the overlapped boundary area is smaller than a dot interval in the other area; therefore, a black stripe noise is likely to appear on a printed image in the conventional method in which all the missing dots are replaced with complementary dots.

Fig. 19 illustrates, as "D", the dot distribution in a case that the density of the complementary dots is adjusted to be nearly equal to the density of dots around the complementary dots on the basis of the print position of the alternative nozzle in the overlapped boundary area and on the basis of the dot distribution in the overlapped boundary area by the dot determining unit 612 or 612' of the image forming apparatus 60 or 60' according to the first or second embodiment.

In "D" of Fig. 19, the distance between the complementary dot and the adjacent dot in the printing area 1 is small and the density of dots is high; therefore the number of complementary dots to be formed is decreased. For example, Fig. 19 illustrates, as "D", a state where two dots, i.e., the first and fifth dots from the top have been eliminated. Thus, the density of dots (or the density of an image) at the right end of the overlapped boundary area is nearly equal to the density of the peripheral dots (or the density of a peripheral image), which prevents the stripe noise from appearing on a printed image.

As illustrated in Fig. 19, if there is a non-ejectable nozzle at the right end of the overlapped boundary area, the complementary dots are formed on the right side of the missing dots, being shifted by the distance Δd. Therefore, the complementary dots is close to the right-side adjacent dots in the printing area 1, resulting in the appearance of the stripe noise on the printed image. Thus, adjusting the density of complementary dots offers a great advantage in the prevention of an occurrence of a stripe noise.

The density of the complementary dots is adjusted in Fig. 19; however, the size of a complementary dot may be changed so that the complementary dots are formed at a density nearly equal to the density of the peripheral dots, which can prevent the appearance of stripe noises.

Fig. 19 illustrates a case where the positions of the complementary dots are shifted to the right. If the positions of the complementary dots are shifted to the left, the complementary dots are located away from the dots in the printing area 1, which easily causes the appearance of a white stripe noise at the right end of the overlapped boundary area. In this case, the number of complementary dots is increased so that the density of the complementary dots becomes higher, which can prevent the appearance of the stripe noise.

For example, there may be a case that the density of complementary dots cannot be made higher by increasing the number of complementary dots because the dots have already been formed at all the possible positions. In such a case, the size of a complementary dot may be increased so that the density of the image at the area where the complementary dots are formed is increased, which can prevent the appearance of the above-described white stripe noise.

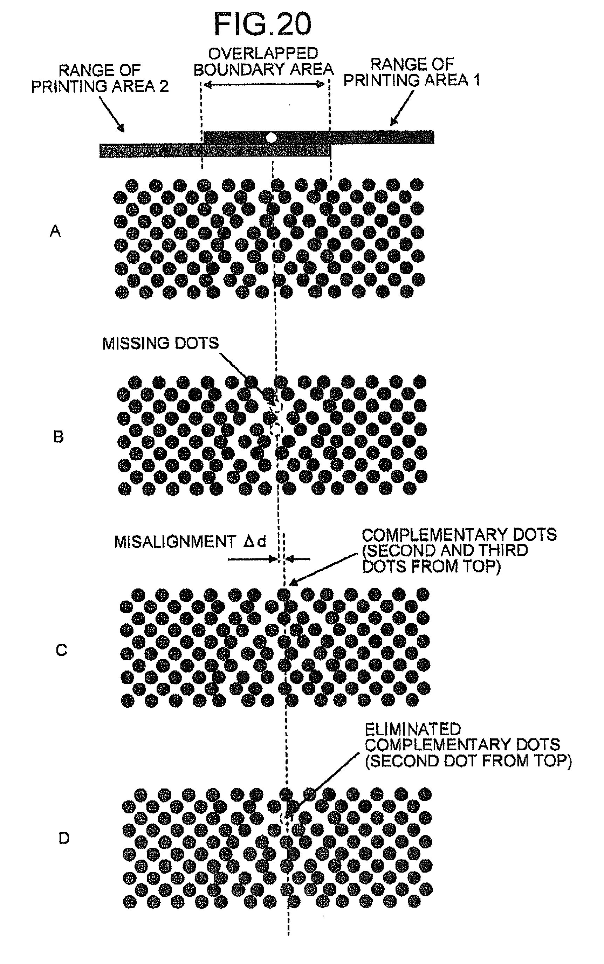

Fig. 20 is a diagram that illustrates a second example of the array of dots formed by the image forming apparatus according to the first to fourth embodiments.

A case "A" of Fig. 20 is the same as the case "A" of Fig. 19 except that the white circle that indicates the position of the non-ejectable nozzle is located in the middle of the overlapped boundary area within the black bar that indicates the range of the printing area 1.

A case "B" of Fig. 20 illustrates a state where the dots are missing in the overlapped boundary area due to the existence of a non-ejectable nozzle, a case "C" of Fig. 20 illustrates a state where all the missing dots are replaced with complementary dots in a conventional method, and a case "D" of Fig. 20 illustrates a state where the density of the complementary dots is adjusted on the basis of the print position of the alternative nozzle in the overlapped boundary area and on the basis of the dot distribution in the overlapped boundary area by the image forming apparatus 60 or 60' according to the first or second embodiment.

As illustrated in Fig. 20, if there is a non-ejectable nozzle in the middle of the overlapped boundary area, the dots formed around the complementary dots includes a mix of the dots formed during the first scanning operation and the dots formed during the second scanning operation. Therefore, the distances between complementary dots and other dots are not uniform or even. As a result, even if the complementary dots are formed, the stripe noise that appears on the printed image is not noticeable. Therefore, in the case illustrated in Fig. 20, the number of complementary dots to be eliminated is smaller, i.e., the extent of density adjustment is lower, when compared to the cases illustrated in Fig. 19. For example. Fig. 20 illustrates, as "D", a state where one dot that is the second dot from the top has been eliminated.

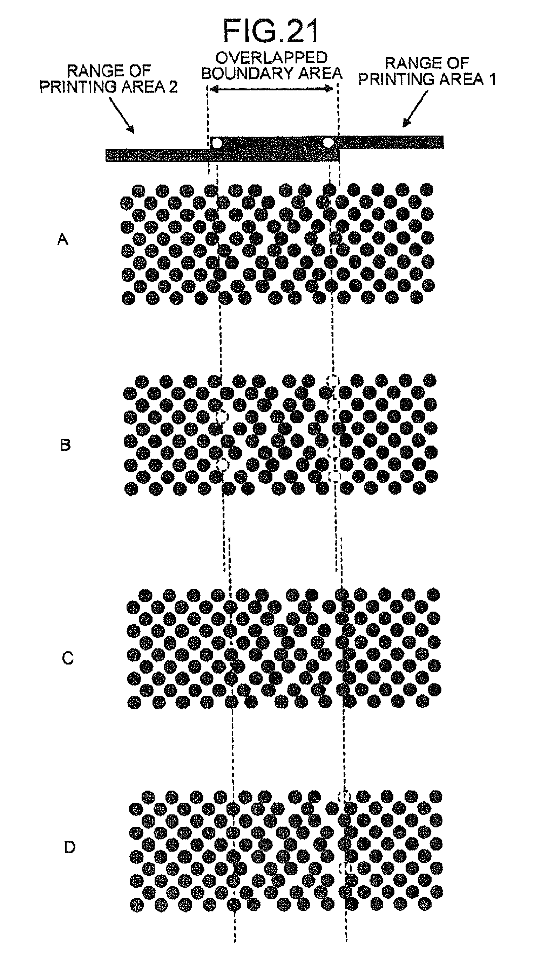

Fig. 21 illustrates a third example of the array of dots formed by the image forming apparatus according to the first to fourth embodiments.

In Fig. 21, the dots included in the printing area 1 and the dots included in the printing area 2 are not uniformly distributed in the overlapped boundary area. They are shifted in the horizontal direction in the figure of the overlapped boundary area.

The black and white bars illustrated on the upper section of Fig. 21 indicate the range of the printing area 1 (right-side in the figure) and the range of the printing area 2 (left-side in the figure), respectively, in the same manner as that in "A" of Fig. 19. The diagram in "A" of Fig. 21 illustrates the dot distribution in a case that there is not non-ejectable nozzle. The dots are distributed in the overlapped boundary area such that the number of dots included in the printing area 1 is gradually decreased and the number of dots included in the printing area 2 is gradually increased from the right side to the left side of the overlapped boundary area.

A case of "B" in Fig. 21 illustrates a case that nozzles located both at the right end and the left end of the overlapped area of the printing area 1 become non-ejectable nozzles, resulting in the dot defects (missing dots). Furthermore, a case "c" of Fig. 21 illustrates a case that all the missing dots are replaced with complementary dots formed by an alternative nozzle in a conventional method, and a case "D" of Fig. 21 illustrates a case that the density of complementary dots is adjusted, i.e., the number of complementary dots is adjusted on the basis of the print position of the alternative nozzle in the overlapped boundary area and on the basis of the dot distribution in the overlapped boundary area by the image forming apparatus 60 or 60' according to the first or second embodiment. The positions of the non-ejectable nozzles are indicated as the white circles in the black bar illustrated at the top of Fig. 21.

As illustrated in "C" of Fig. 21, dots of the printing area 1 exist more than the dots of the printing area 2 at the right end of the overlapped boundary area. Therefore, if the nozzle of the printing area 1 becomes the non-ejectable nozzle, the dot defects are noticeable. In this case, if all the missing dots are made it up with complementary dots, the black stripe noise is likely to appear at the right end of the overlapped boundary area. On the other hand, there are less dots of the printing area 1 at the left end of the overlapped boundary area. As a result, the dot defects are less noticeable. Thereby, even if all the missing dots are made up with the complementary dots, the stripe noise hardly appears on the image since the difference between the density of complementary dots and the density of surrounding other dots is small.

Therefore, as illustrated in "D", of Fig. 21, the extent of density adjustment of complementary dots (i.e., the number of dots to be eliminated) is larger at the right end of the overlapped boundary area and is smaller at the left end of the overlapped boundary area. In "D" of Fig. 21, for example, the first and third complementary dots from the top are eliminated at the right end of the overlapped boundary area, while the complementary dots at the left end of the overlapped boundary area remains its number without being eliminated.

As described above, according to the first to fourth embodiments, if there is a non-ejectable nozzle in the overlapped boundary area of two adjacent printing areas and therefore some dots are missing, an alternative nozzle is selected to complement the missing dots, and the size or density of complementary dots is determined in accordance with the print position of the alternative nozzle in the overlapped boundary area and in accordance with the dot distribution in the overlapped boundary area. Thus, the density of an image (complementary image) formed by using complementary dots can be nearly equal to the density of the peripheral image, which can prevent the occurrence of stripe noises on a printed image.

According to the present embodiment, even if there is a non-ejectable nozzle in a recording head, an ink-jet image forming apparatus can form a printed image on a recording medium without stripe noises.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image forming apparatus (60) comprising:
an ink-jet recording head (7) that scans a recording medium (12) in a main scanning direction;
a conveying unit (21) that conveys the recording medium by a predetermined distance in a sub scanning direction so that a printing area formed at every scan by the recording head overlaps with an adjacent printing area at their boundary area;
a plurality of nozzles (104) of the head that form dots by using different nozzles of the same head at every scan in the overlapped boundary area;
a distribution determining unit (606) that determines a dot distribution to be formed at every scan in the overlapped boundary area;
a nozzle determining unit (610) that determines, when a nozzle for forming dots in the overlapped boundary area becomes non-ejectable, an alternative nozzle capable of forming dots instead of the non-ejectable nozzle from among the plurality of nozzles for forming dots in the overlapped boundary area; and
a dot determining unit (612) that determines a dot size or a dot density to be formed by the alternative nozzle in the overlapped boundary area, on the basis of a printing position by the alternative nozzle in the overlapped boundary area determined by the nozzle determining unit, and on the basis of the dot distribution determined by the dot distribution determining unit.

2. An image forming apparatus (60') comprising:
a recording head (7') including a plurality of ink-jet head units (72) arranged so that a printing area formed by one head unit overlaps with a printing area formed by an adjacent head unit at their boundary area;
a plurality of nozzles (74) of the head that form dots using nozzles of both adjacent head units in the overlapped boundary area;
a distribution determining unit (606') that determines a dot distribution to be formed by each head unit in the overlapped boundary area;
a nozzle determining unit (610') that determines, when a nozzle of one head unit for forming dots in the overlapped boundary area becomes non-ejectable, an alternative nozzle capable of forming dots instead of the non-ejectable nozzle from among the nozzles of the adjacent head unit for forming dots in the overlapped boundary area; and
a dot determining unit (612') that determines a dot size or a dot density to be formed by the alternative nozzle in the overlapped boundary area, on the basis of a printing position by the alternative nozzle in the overlapped boundary area determined by the nozzle determining unit, and on the basis of the dot distribution determined by the dot distribution determining unit.

3. The image forming apparatus (60, 60') according to claim 1 or 2, wherein
the distribution determining unit (606, 606') determines the dot distribution, on the basis of a mask pattern defining a dot forming position in the overlapped boundary area extending over two printing areas, and
the dot determining unit (612, 612') determines the dot density to be formed by the alternative nozzle by changing the mask pattern.

4. The image forming apparatus (60, 60') according to any one of claims 1 to 3, wherein
the dot determining unit (612, 612') determines the dot size or the dot density to be formed by the alternative nozzle so that the dot size or the dot density to be formed by the alternative nozzle is smaller or lower than the dot size or the dot density to be formed by the non-ejectable nozzle, when the printing position by the alternative nozzle in the overlapped boundary area is located at an edge of the overlapped boundary area, and a minimum distance between the dot to be formed by the alternative nozzle and the adjacent dot to be formed outside the overlapped boundary area is narrower than a distance between dots in the printing area outside the overlapped boundary area.

5. The image forming apparatus (60, 60') according to any one of claims 1 to 4, wherein
the dot determining unit (612, 612') determines the dot size or the dot density to be formed by the alternative nozzle so that the dot size or the dot density to be formed by the alternative nozzle is larger or higher than the dot size or the dot density to be formed by the non-ejectable nozzle, when the printing position by the alternative nozzle in the overlapped boundary area is located at an edge of the overlapped boundary area, and a minimum distance between the dot to be formed by the alternative nozzle and the adjacent dot to be formed outside the overlapped boundary area is wider than a distance between dots in the printing area outside the overlapped boundary area.

6. An image forming method comprising:
scanning a recording medium (12) in a main scanning direction by an ink-jet recording head (7);
conveying the recording medium by a predetermined distance in a sub scanning direction so that a printing area formed at every scan by the recording head overlaps with an adjacent printing area at their boundary area by a conveying unit (21);
forming dots by using different nozzles (104) of the same head at every scan in the overlapped boundary area,
determining a dot distribution to be formed at every scan in the overlapped boundary area;
determining, when a nozzle for forming dots in the overlapped boundary area becomes non-ejectable, an alternative nozzle capable of forming dots instead of the non-ejectable nozzle from among other nozzles for forming dots in the overlapped boundary area; and
determining a dot size or a dot density to be formed by the alternative nozzle in the overlapped boundary area, on the basis of a printing position by the alternative nozzle in the overlapped boundary area determined at the nozzle determining, and on the basis of the dot distribution determined at the dot distribution determining.

7. A computer program product comprising a non-transitory computer-readable medium having computer-readable program codes embedded in the medium, the program codes when executed causing a computer to execute:
scanning a recording medium (12) in a main scanning direction by an ink-jet recording head (7);
conveying the recording medium by a predetermined distance in a sub scanning direction so that a printing area formed at every scan by the recording head overlaps with an adjacent printing area at their boundary area by a conveying unit (21);
forming dots by using different nozzles (104) of the same head at every scan in the overlapped boundary area;
determining by a distribution determining unit (606) a dot distribution to be formed at every scan in the overlapped boundary area;
determining by a nozzle determining unit (610), when a nozzle for forming dots in the overlapped boundary area becomes non-ejectable, an alternative nozzle capable of forming dots instead of the non-ejectable nozzle from among other nozzles for forming dots in the overlapped boundary area; and
determining by a dot determining unit (612) a dot size or a dot density to be formed by the alternative nozzle in the overlapped boundary area, on the basis of a printing position by the alternative nozzle in the overlapped boundary area determined by the nozzle determining unit, and on the basis of the dot distribution determined by the dot distribution determining unit.
